# FASCICULE DE BREVET EUROPEEN

(11) **EP 1 935 298 B1**
(45) Date de publication et mention de la délivrance du brevet: **11.08.2010**
(21) Numéro de dépôt: 07291493.0
(22) Date de dépôt: 11.12.2007
(51) Int. Cl.: A47J 31/40

(54) **Machine pour préparer une infusion à l'aide d'une dose pré-emballée de produit et procédé de commande d'une telle machine**
Maschine zur Zubereitung von Tee mit Hilfe einer vorverpackten Produktdosis und Steuerungsverfahren einer solchen Maschine
Machine for making an infusion using a pre-packaged dose of product and method for controlling such a machine

(30) Priorité: 18.12.2006 FR 0611037
(43) Date de publication de la demande: 25.06.2008
(73) Titulaire: SEB S.A., 69130 Ecully (FR)
(72) Inventeur: Turpin, Romain, 14210 Sainte Honorine du Fay (FR); Launay, Gérard, 14190 Cauvicourt (FR); Lebuffe, Gilles, 50890 Conde sur Vire (FR)
(74) Mandataire: Kiehl, Hubert

(56) Documents cités:
- EP-A1- 1 541 070
- EP-B1- 1 146 807
- WO-A1-2006/054035
- US-A- 4 624 395

## Description

La présente invention se rapporte à une machine pour préparer une infusion, telle que par exemple du café, à l'aide d'une dose pré-emballée de produit à infuser se présentant notamment, mais non exclusivement, sous forme d'une capsule rigide. Plus particulièrement, la présente invention se rapporte à une machine pour préparer une infusion comprenant :
- une chambre d'infusion délimitée par un réceptacle et un couvercle, ledit réceptacle présentant un débouché et étant apte à recevoir au moins en partie une dose pré-emballée de produit à infuser, et ledit couvercle étant mobile par rapport au réceptacle sous l'action d'un dispositif de commande entre une position fermée et une position ouverte dans laquelle il est situé à distance du débouché du réceptacle et ménage avec ledit débouché un espace libre ;
- un conduit d'alimentation apte à conduire la dose de produit depuis une ouverture d'introduction jusqu'au réceptacle en passant par l'espace libre de la chambre d'infusion en position ouverte ; et
- un dispositif de détection de dose de produit apte à indiquer au dispositif de commande la présence ou l'absence d'une dose de produit dans une zone prédéterminée de détection.

La présente invention se rapporte également à un procédé de commande d'une telle machine.

Des machines de ce type comportant un dispositif de détection d'une dose pré-emballée de produit à infuser sont connues, notamment du document EP-A-1146807. Ce document divulgue une machine à café qui comporte un capteur de présence agencé à l'entrée d'un moyen de guidage d'une dose pré-emballée de produit à infuser. Ce capteur de présence permet de détecter si une dose de produit est bien en position d'attente, afin d'autoriser ensuite une séquence de fonctionnement au cours de laquelle des parties formant réceptacle et couvercle de la chambre d'infusion sont entraînées en déplacement.

Le capteur décrit dans ce document sert donc à initier une séquence de fonctionnement, et éventuellement à s'assurer que la dose pré-emballée de produit à infuser est bien partie vers la chambre d'infusion.

Toutefois, outre le fait de déterminer si les conditions d'initiation d'une séquence de fonctionnement sont remplies, il est utile dans une telle machine de détecter également certaines anomalies qui peuvent survenir au cours de la séquence de fonctionnement, afin de prévenir dès que possible l'utilisateur avec un ou différents messages pouvant aider à remédier rapidement à l'anomalie. La détection de telles anomalies peut également être mise à profit pour éviter un éventuel endommagement de la machine. Néanmoins, il est préférable d'éviter la multiplication des capteurs et autres dispositifs de détection pour que le coût de fabrication de la machine reste acceptable.

La présente invention a donc pour but de proposer une machine à infuser fonctionnant selon une séquence plus ou moins automatisée, dans laquelle un certain nombre d'anomalies susceptibles d'intervenir au cours du fonctionnement peuvent être détectées avec un nombre réduit de dispositifs de détection.

A cet effet, la présente invention a pour objet une machine pour préparer une infusion du type précité, caractérisée en ce que la zone prédéterminée de détection est située au moins en partie dans l'espace libre de la chambre d'infusion en position ouverte.

Grâce à cet agencement particulier de la zone prédéterminée de détection, il est possible non seulement de vérifier que la machine a bien été alimentée avec une dose pré-emballée de produit, que ce soit manuellement ou à l'aide d'un dispositif de distribution automatique de doses, mais aussi que la dose est bien arrivée jusqu'à la chambre d'infusion en position ouverte. De plus, la zone prédéterminée de détection agencée de manière adéquate dans l'espace libre permet de vérifier si la dose de produit est au moins partiellement engagée dans le réceptacle de la chambre d'infusion, et par conséquent de ne commander la fermeture de la chambre d'infusion que dans ce cas.

En effet, si une dose de produit est mal orientée par rapport au réceptacle de la chambre d'infusion, par exemple parce qu'elle a été introduite à l'envers, elle reste bloquée dans l'espace libre de la chambre d'infusion et obstrue la zone prédéterminée de détection. Il est à noter que l'espace libre de la chambre d'infusion n'est en général pas sensiblement plus grand que les dimensions d'une dose pour des raisons de coût et d'encombrement.

Par contre, si la dose de produit arrive de manière correctement orientée au niveau de l'espace libre, elle s'engagera au moins en partie, voire totalement, dans le réceptacle. Il sera alors possible à l'aide du dispositif de détection, et éventuellement d'autres dispositions concernant la commande de la fermeture de la chambre d'infusion, de s'assurer du positionnement correct de la dose dans le réceptacle.

Par ailleurs, la zone prédéterminée de détection agencée selon l'invention permet aussi de s'assurer de l'évacuation correcte de la dose de produit après une opération d'infusion, et notamment de vérifier si elle n'est pas restée bloquée au niveau de l'espace libre de la chambre d'infusion à la suite d'un trop plein ou remplissage excessif d'un bac de récupération.

Dans des modes de réalisation préférés de l'invention, on peut avoir recours, en outre, aux dispositions suivantes :
- la zone prédéterminée de détection est agencée de manière à être sensiblement adjacente à la dose de produit lorsque celle-ci est correctement positionnée dans le réceptacle de la chambre d'infusion ; cette disposition permet d'obtenir à nouveau un signal d'absence de dose uniquement lorsque celle-ci est correctement positionnée ;
- la zone prédéterminée de détection a la forme d'un faisceau s'étendant en travers de l'espace libre de la chambre d'infusion de manière sensiblement parallèle au débouché du réceptacle, ce qui permet d'obtenir une zone de détection délimitée de manière très précise ;
- le dispositif de détection comprend un émetteur et un récepteur, ledit émetteur étant apte à émettre un rayon optique sur le récepteur en l'absence d'une dose de produit dans la zone prédéterminée de détection ; ce type de détection peut être effectué de manière très fiable avec des composants électroniques bon marché ;
- l'émetteur et le récepteur sont situés à distance de la chambre d'infusion, et de préférence à une distance supérieure à la moitié de la dimension principale du débouché du réceptacle ; ceci permet d'éviter toute perturbation du fonctionnement du dispositif de détection du fait de l'humidité et de la chaleur régnant dans la chambre après une opération d'infusion.

Une machine pour préparer une infusion ainsi réalisée est toute particulièrement adaptée pour être mise en oeuvre selon le procédé de commande suivant qui comprend, préalablement à une opération d'infusion, les étapes de :
- introduction d'une dose pré-emballée de produit à infuser par l'ouverture du conduit d'alimentation ;
- attente d'un signal de présence d'une dose de produit par le dispositif de détection ; puis
- attente d'un signal d'absence de la dose de produit par ledit dispositif de détection ; puis
- commande du déplacement relatif du couvercle jusqu'à la position fermée de la chambre d'infusion.

Grâce à la réception successive d'un signal de présence et d'un signal d'absence d'une dose de produit à infuser, on peut déterminer que non seulement la chambre a bien reçu une dose de produit, mais aussi que cette dose est au moins en partie engagée dans le réceptacle, voire qu'elle est correctement positionnée dans le réceptacle, et ainsi commander le déplacement du couvercle jusqu'à la position de fermeture sans risquer un endommagement de la machine.

Dans le cas contraire, c'est-à-dire si le signal d'absence de dose ne survient pas dans un temps prédéterminé, par exemple d'un dixième de seconde à une seconde, après l'émission du signal de présence de la dose de produit, une procédure d'incident est déclenchée.

Néanmoins, le fait que la dose reste présente dans la zone prédéterminée de détection peut être dû soit à un léger défaut d'alignement de la dose avec le réceptacle de la chambre d'infusion, soit à un défaut irrémédiable d'introduction de la dose, comme par exemple une introduction à l'envers. Afin d'éviter de demander systématiquement une intervention de l'utilisateur lors d'une procédure d'incident, il est prévu que cette procédure comporte une étape initiale au cours de laquelle le dispositif de commande commande un premier déplacement relatif du couvercle depuis sa position ouverte jusqu'à une position intermédiaire entre les positions ouverte et fermée, et au cours duquel le dispositif de commande attend l'émission d'un signal d'absence de dose de produit ; et
- si un signal d'absence de dose survient dans un temps prédéterminé après le premier déplacement relatif, le dispositif de commande commande un deuxième déplacement du couvercle jusqu'à la position fermée ;
- si un signal d'absence de dose ne survient pas, un signal d'alerte est émis vers l'utilisateur.

Grâce à ce premier déplacement du couvercle, on obtient un repositionnement correct de la dose dans le réceptacle de la chambre dans la plupart des cas où le blocage de la dose n'est pas irrémédiable. Ce premier déplacement doit être d'amplitude suffisante pour agir sur la dose et forcer son introduction dans le réceptacle, mais il doit rester nettement inférieur à l'amplitude du déplacement total nécessaire pour fermer la chambre d'infusion, par exemple entre un sixième et un tiers de ce déplacement total, pour éviter une déformation excessive d'une dose bloquée qui entraînerait des difficultés pour retirer celle-ci par la suite, et éviter également des contraintes mécaniques dommageables au mécanisme de déplacement du couvercle.

Bien entendu, si ce premier déplacement du couvercle ne suffit pas à repositionner correctement la dose de produit, un signal d'alerte est émis vers l'utilisateur et la séquence de préparation d'une infusion est arrêtée. Dans ce cas, il est préférable que le dispositif de commande commande un déplacement du couvercle vers sa position ouverte, afin de faciliter le retrait de la dose de produit par l'utilisateur.

Par ailleurs, le procédé de commande de la machine peut également comporter la séquence d'étapes suivantes après l'opération d'infusion pour détecter notamment un trop plein d'un bac de récupération :
- attente d'un signal de présence d'une dose de produit par le dispositif de détection ; puis
- attente d'un signal d'absence de la dose de produit par ledit dispositif de détection ; et
- émission d'un signal indiquant un remplissage excessif du bac de récupération dans le cas où le signal d'absence de dose ne survient pas dans un temps prédéterminé après le signal de présence.

D'autres caractéristiques et avantages de l'invention ressortiront au cours de la description qui va suivre, donnée à titre d'exemple non limitatif, en référence aux dessins dans lesquels :
- la figure 1 est une vue en perspective arrachée d'une machine pour préparer une infusion comprenant une chambre d'infusion en deux parties en position ouverte et un dispositif de détection d'une dose de produit à infuser selon un premier mode de réalisation ;
- la figure 2 représente le premier mode de réalisation du dispositif de détection vu de dessus ;
- la figure 3 représente un deuxième mode de réalisation du dispositif de détection vu de dessus ;
- les figures 4 à 6 représentent des étapes d'une séquence de fermeture de la chambre d'infusion au cours de laquelle une dose de produit est introduite dans la chambre sans incident ;
- les figures 7 et 8 représentent des étapes d'une séquence de fermeture au cours de laquelle une dose de produit est temporairement bloquée au niveau de la chambre d'infusion ;
- les figures 9 à 11 représentent des étapes d'une séquence de fermeture au cours de laquelle une dose de produit est irrémédiablement bloquée au niveau de la chambre d'infusion.

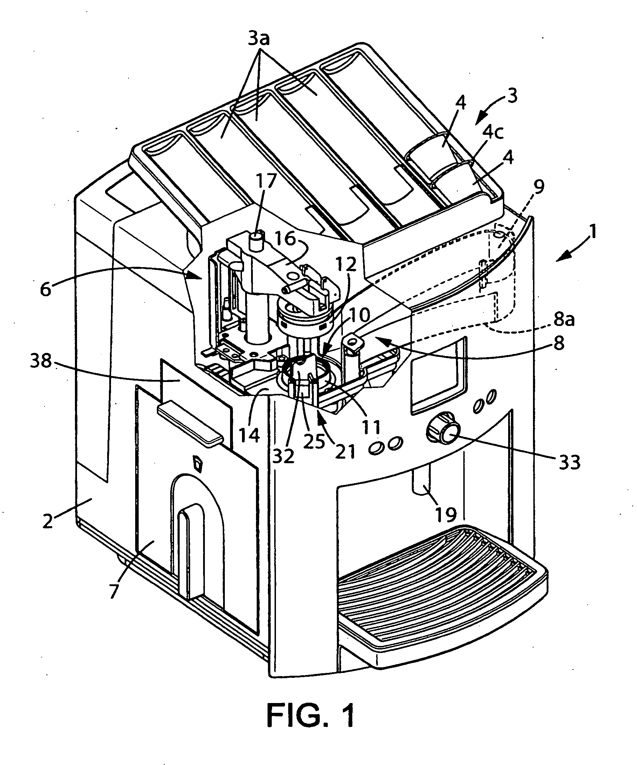

A la figure 1 est représentée une machine à café 1 comprenant un boîtier 2 surmonté d'un système de distribution automatique 3 de doses pré-emballées de produit à infuser 4. Le boîtier 2 comporte de manière bien connue un système d'infusion 6, un bac de récupération 7 de doses infusées et un conduit d'alimentation 8 conçu pour conduire une dose de produit 4 depuis une ouverture d'introduction 9 jusqu'au système d'infusion 6.

La machine à café 1 comprend également de manière bien connue un réservoir d'eau, un générateur électrique d'eau chaude sous pression et au moins une unité électronique formant un dispositif de commande. Cette unité électronique commande les différents actionneurs et éléments chauffants de la machine, en fonction de signaux envoyés par différents boutons de commande et capteurs.

Le système d'infusion 6 comporte une chambre d'infusion 10 délimitée par un réceptacle 11 et un couvercle 12.

Le réceptacle 11 présente un creux délimité par une paroi intérieure légèrement tronconique et un fond. Le débouché du réceptacle 11, délimité par un pourtour annulaire 11a, est orienté vers le haut.

Le creux du réceptacle 11 est conformé pour recevoir au moins en partie une dose pré-emballée de produit 4, voire quasi intégralement cette dose 4 comme dans le cas particulier du mode de réalisation représenté.

En effet, dans le mode de réalisation représenté, les doses pré-emballées de produit 4 sont des capsules métalliques rigides de forme globalement tronconique avec une collerette 4c à la base. Le sommet de la capsule est perçable par une aiguille pour injecter de l'eau chaude sous pression, tandis que la base comporte une membrane déchirable.

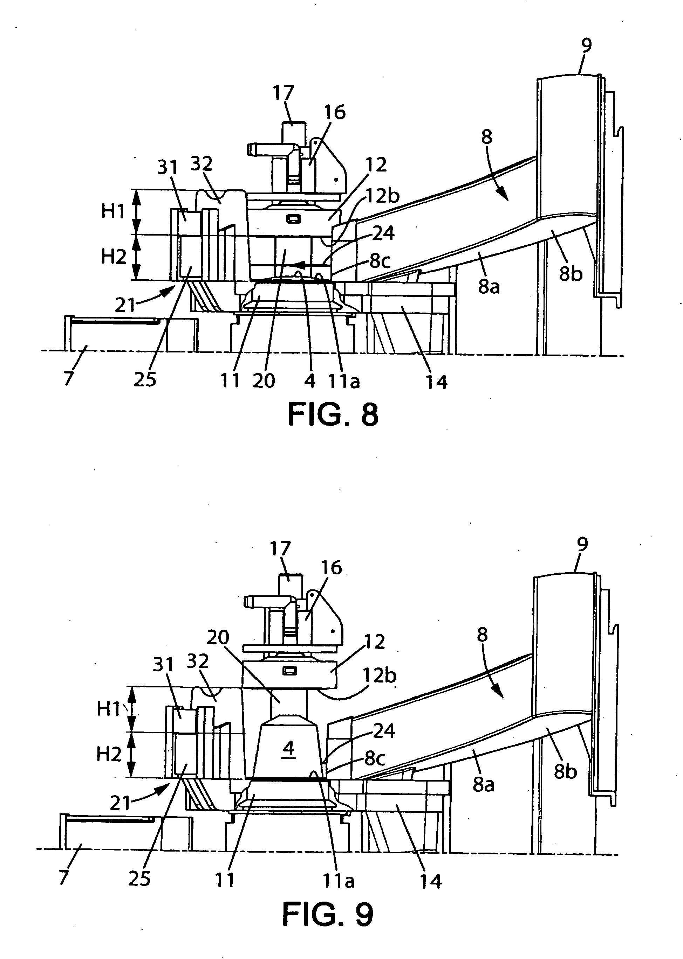

Le creux du réceptacle 11 a une forme complémentaire à la dose 4 pour minimiser l'espace libre entre celle-ci et le réceptacle, et ainsi soutenir les parois de la dose 4 lorsque l'eau sous pression est injectée. La dose pré-emballée de produit 4 ne peut donc être introduite que lorsqu'elle est correctement orientée par rapport au débouché du réceptacle 11. Quand la dose 4 est correctement positionnée, la collerette 4c de celle-ci vient en appui sur le pourtour 11a du débouché, de sorte qu'une partie très réduite de la dose, correspondant à l'épaisseur de sa collerette 4c, dépasse du réceptacle 11. Par contre, si la dose est présentée au niveau du débouché du réceptacle 11 dans une position inversée, c'est-à-dire avec la collerette 4c vers le bas, comme représenté à la figure 9, il est impossible de l'introduire dans le réceptacle 11.

Toutefois, il pourrait s'agir d'autres types de capsules rigides se présentant par exemple sous forme d'un boîtier plastique contenant une dose prédéterminée de mouture de café ou de tout autre produit susceptible d'être infusé, comme par exemple du thé, du lait en poudre ou du chocolat en poudre. La dose de produit à infuser pourrait également se présenter sous la forme d'une dose semi-rigide de mouture plus ou moins compactée, et emballée dans un papier filtre. Néanmoins, il est préférable que la dose pré-emballée de produit ne soit pas excessivement déformable afin qu'elle puisse se placer aisément dans le réceptacle, notamment par gravité, et qu'une fois correctement placée dans le réceptacle, la partie apparente de la dose soit à une hauteur prédéterminée minimale par rapport au débouché du réceptacle 11. Mais bien entendu, la portion apparente de la dose pourrait présenter une portion plus importante que la collerette 4c de la dose utilisée dans le mode de réalisation représenté.

Le réceptacle 11 est solidaire d'une platine horizontale 14 fixée au boîtier 2, de sorte que le réceptacle 11 est fixe par rapport au boîtier 2. La platine 14 permet de recueillir d'éventuels écoulements de liquide et présente un côté sensiblement adjacent au débouché du bac de récupération 7 lorsque celui-ci est en place.

Le couvercle 12 de la chambre d'infusion 10 présente sur sa face inférieure 12b en regard avec le débouché du réceptacle 11, une empreinte complémentaire à la base et à la collerette 4c d'une dose pré-emballée de produit 4.

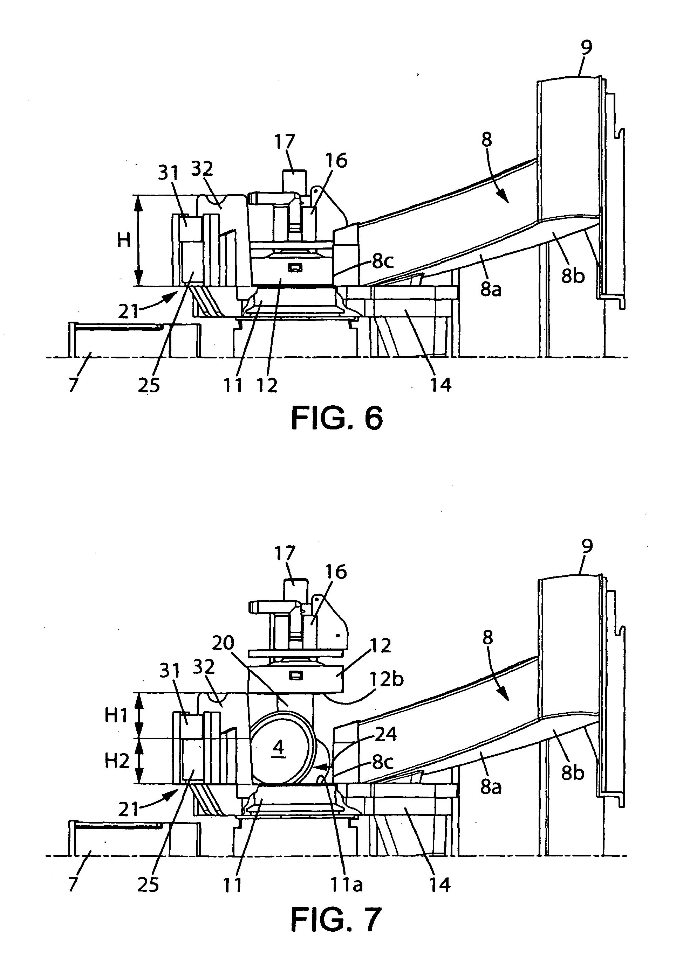

Le couvercle 12 est relié à une potence 16 elle-même fixée à la tige 17 d'un vérin hydraulique. Le déplacement de la tige 17 du vérin est commandé par le dispositif de commande de la machine à l'aide d'électrovannes et de pompes, pour déplacer le couvercle 12 par rapport au réceptacle fixe 11 entre une position ouverte, représentée aux figures 1, 4, 5, 7 et 9, et une position fermée, représentée à la figure 6. Les mouvements de fermeture et d'ouverture de la chambre d'infusion 10 sont obtenus par des translations verticales respectivement vers le bas et vers le haut du couvercle 12.

Toutefois, le couvercle 12 pourrait effectuer un déplacement sensiblement différent, par exemple sous forme d'un arc de cercle. Il est aussi à noter que le réceptacle 11 de la chambre d'infusion pourrait lui aussi effectuer un déplacement, comme par exemple un mouvement de basculement, voire être la seule partie mobile par rapport à un couvercle fixe.

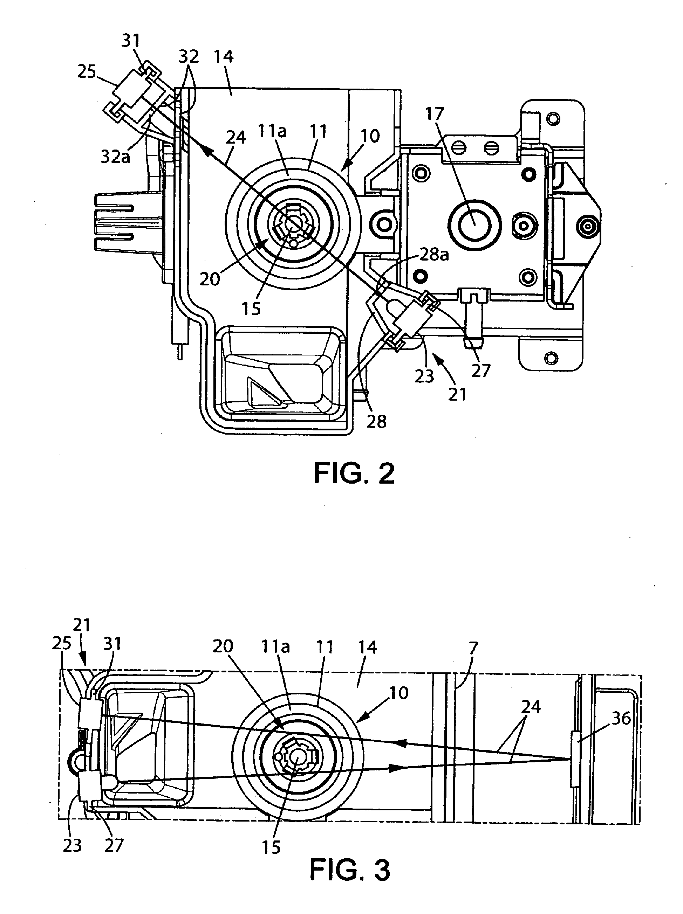

En position fermée du couvercle 12, le réceptacle 11 et le couvercle 12 définissent avec la dose pré-emballée de produit 4 un espace étanche, notamment en pressant la collerette 4c contre le pourtour 11a du réceptacle 11, dans lequel de l'eau chaude sous pression est injectée pour infuser le produit contenu dans la dose 4. La position fermée du couvercle 12 correspond donc à une position d'infusion. Plus particulièrement, dans le mode de réalisation représenté, l'eau chaude sous une pression de l'ordre de 15 bars est délivrée à travers le sommet de la capsule par une aiguille creuse 15, à plusieurs pointes, visible aux figures 2 et 3, et provoque le déchirement de la membrane située à la base. L'infusion collectée par le couvercle 12 est alors dirigée vers une sortie de café 19 (figure 1) par un tuyau flexible non représenté. Il s'agit donc d'une machine à café de type espresso avec une circulation ascendante de l'infusion. Il pourrait toutefois s'agir de tout autre type de machine espresso, ou encore d'une machine de préparation de boissons utilisant de l'eau sous une pression plus faible.

On pourra se référer à la demande de brevet WO-A-99/12455 pour plus de précision sur la commande des déplacements du couvercle 12 et sur le circuit d'alimentation en eau chaude.

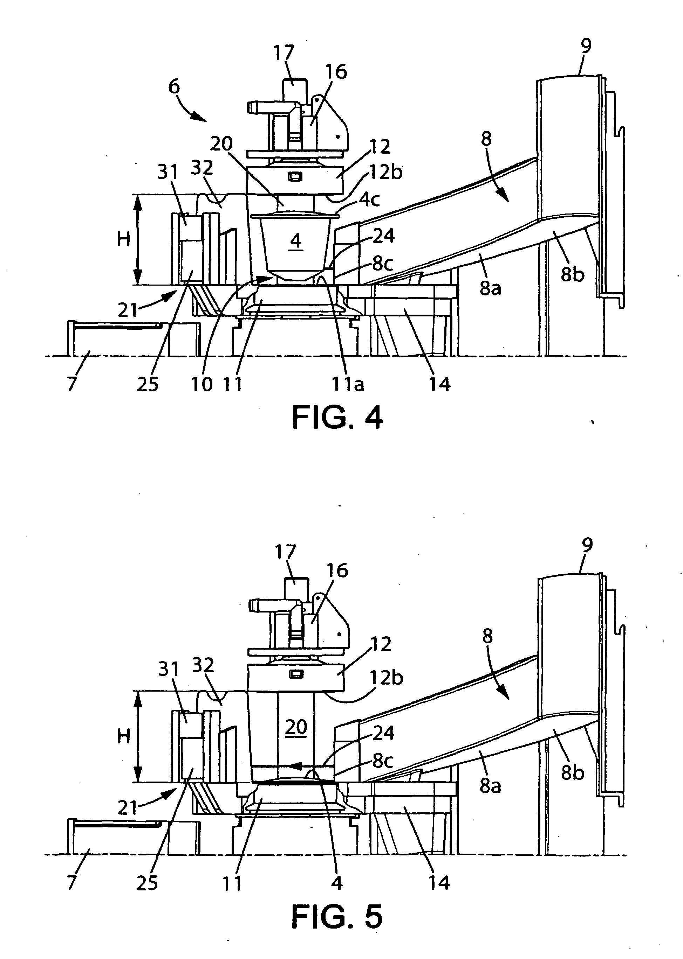

En position ouverte, le couvercle 12 est relevé à une hauteur H par rapport au réceptacle 11, comme on peut le voir aux figures 4 et 5. Dans cette position, le couvercle 12, et plus particulièrement la face inférieure 12b de celui-ci, définit avec le réceptacle 11, et plus particulièrement avec le pourtour annulaire 11a de ce dernier, un espace libre 20. L'espace libre 20 a donc la forme d'un cylindre dont le diamètre correspond au diamètre extérieur du réceptacle 11 et dont la hauteur H correspond à la distance séparant le couvercle 12 du réceptacle 11.

L'espace libre 20 de la chambre d'infusion 10 en position ouverte doit permettre le passage d'une dose pré-emballée de produit 4 afin que celle-ci puisse arriver du conduit d'alimentation 8 avec une orientation correcte au niveau du débouché du réceptacle 11, et s'introduire au moins partiellement dans le creux de ce réceptacle 11. Par conséquent, la hauteur H de l'espace libre 20 doit être légèrement supérieure à la hauteur de la dose de produit 4. Il est à noter qu'une distance fortement supérieure augmenterait la course du déplacement du couvercle 12 et l'encombrement à l'intérieur de la machine 1. Dans le cas où le couvercle 12 aurait une cinématique sensiblement plus complexe qu'une translation, il est possible de considérer l'espace libre 20 comme étant l'espace s'étendant à partir du débouché du réceptacle 11, qui est susceptible de contenir une seule dose de produit à infuser, et qui est balayée par le couvercle à la fin du mouvement de fermeture de la chambre d'infusion 10.

Les doses de produit à infuser 4 sont amenées par le conduit d'alimentation 8 qui a, pour le mode de représentation représenté, une forme de rampe 8a en arc de cercle s'étendant depuis une extrémité supérieure 8b située sous l'ouverture d'introduction 9 jusqu'à un débouché inférieur 8c situé au niveau, ou légèrement au-dessus, du pourtour 11a du réceptacle 11.

Les doses pré-emballées de produit 4 sont délivrées de manière automatique par le système de distribution 3 (figure 1) qui comprend plusieurs organes de stockage parallèles 3a. Ce système comporte un dispositif automatique non visible permettant l'amenée d'une dose, sélectionnée à l'aide d'un bouton de commande 33, au niveau de l'ouverture d'introduction 9. La dose 4 est délivrée alors de manière correctement orientée, c'est-à-dire avec la collerette 4c orientée vers le haut. La largeur et l'inclinaison de la rampe 8a du conduit d'alimentation 8 permettent de conserver globalement l'orientation d'une dose de produit 4, même si elle a tendance à se coucher sur cette rampe. En arrivant au débouché 8c du conduit d'alimentation 8, la dose 4 rencontre le creux du réceptacle 11 qui a tendance à la redresser et à permettre son introduction dans le réceptacle 11 dans la plupart des cas.

Bien entendu, la dose de produit 4 pourrait être délivrée manuellement au niveau de l'ouverture d'introduction 9, celle-ci ayant alors de préférence un profil particulier pour imposer l'orientation correcte d'une dose lors de son introduction. Néanmoins, étant donné les variations qu'il peut y avoir lors d'une introduction manuelle, le risque de mauvaise introduction ou d'introduction incomplète d'une dose 4 dans le réceptacle 11 est alors plus important.

Afin de détecter une anomalie de fonctionnement, et plus particulièrement tout type d'incident ayant pour conséquence qu'une dose pré-emballée de produit 4 n'est pas positionnée correctement dans le réceptacle 11, avant de commander la fermeture de la chambre d'infusion 10 par le couvercle 12, le système d'infusion 6 est équipé d'un dispositif de détection 21 de dose de produit.

Comme cela est visible sur la figure 2, le dispositif de détection 21 comprend un émetteur 23 adapté pour émettre un faisceau optique 24 vers un récepteur 25 adapté pour émettre des signaux électriques différents selon qu'il reçoit ou non le faisceau optique 24.

Plus particulièrement, l'émetteur 23 comporte une LED adaptée pour émettre un rayonnement lumineux ou infrarouge de manière directionnelle. Cette LED est montée sur une carte de circuit imprimé 27 et un capot 28 protège la face de cet ensemble émetteur 23 qui est orientée vers la chambre d'infusion 10 et l'espace libre 20. Le capot 28 présente une ouverture 28a de faible dimension, par exemple réalisée sous forme d'une fente, afin que le faisceau 24 sorte sous forme d'un rayon faiblement divergent. Le récepteur 25 comporte un photodétecteur monté sur une carte de circuit imprimé 31. Le photodétecteur 25 et la carte 31 sont protégés, du côté orienté vers la chambre d'infusion 10, par un capot 32 présentant une ouverture étroite 32a agencée pour permettre principalement le passage du faisceau 24. Cette ouverture étroite 32a a pour rôle de limiter les risques de perturbations du photodétecteur 25 par des rayonnements lumineux ambiants.

Le faisceau optique 24 constitue ainsi une zone prédéterminée de détection, ici limitée à un rayon, qui entraîne l'émission d'un signal d'absence de dose de produit lorsqu'aucun objet ne vient perturber sa propagation. Le signal d'absence d'une dose de produit peut correspondre à l'émission d'une tension électrique continue par le récepteur 25. A contrario, si un objet pénètre dans la zone prédéterminée de détection qui correspond à la partie du faisceau 24 reçue par le récepteur 25, le signal électrique émis par celui-ci est modifié, et ainsi la présence d'une dose de produit peut être détectée.

L'émetteur 23 et le récepteur 25 sont agencés sur la platine 14 entourant le réceptacle 11 de la chambre d'infusion 10, de manière à ce que le faisceau de détection 24 passe dans l'espace libre 20 de la chambre d'infusion en position ouverte. Plus précisément, dans ce premier mode de réalisation, le faisceau de détection 24 est sensiblement parallèle au plan moyen du débouché du réceptacle 11 et est orienté selon un diamètre de ce débouché. Le faisceau de détection 24 est de plus compris dans un plan horizontal situé à faible hauteur au-dessus du plan moyen du débouché du réceptacle 11, c'est-à-dire à une hauteur inférieure à la hauteur de la dose pré-emballée de produit à infuser 4. Ainsi, toute dose pénétrant dans le creux du réceptacle 11 coupe nécessairement le faisceau de détection 24, entraînant dès lors l'émission d'un signal de présence d'une dose 4.

Comme cela est mieux visible sur la figure 5, le faisceau lumineux 24 est émis dans un plan parallèle au débouché du réceptacle 11, mais à une distance déterminée au-dessus de ce débouché de sorte que si la dose 4 est correctement positionnée, la partie saillante de celle-ci n'interfère pas avec le faisceau de détection 24. Par conséquent, lorsque la dose de produit 4 est correctement positionnée, le dispositif de détection 21 émet un signal d'absence de dose.

On notera que l'émetteur 23 et le récepteur 25 (figure 2) sont chacun situés à distance de la chambre d'infusion 10 et de son réceptacle 11, à savoir dans le mode de réalisation présenté à distance de plus de 2 centimètres, laquelle distance étant supérieure à la moitié du diamètre du débouché du réceptacle 11. Cet agencement permet avec les capots (28, 32) d'éviter des perturbations du fonctionnement du dispositif de détection 21, voire un endommagement de celui-ci. En effet, la zone entourant la chambre d'infusion 10 constitue un environnement peu propice aux composants électroniques du fait de la présence d'eau chaude sous forme de gouttelettes ou de vapeur lors de l'ouverture. Cet agencement permet également de favoriser l'accès pour une maintenance par l'utilisateur.

Dans une variante de réalisation du dispositif de détection 21 représenté à la figure 3, l'émetteur 23 et le récepteur 25 sont situés d'un même côté du réceptacle 11 et à proximité l'un de l'autre. Un miroir 36 est agencé en regard de l'émetteur et du récepteur (23, 25) de l'autre côté de l'espace libre 20 de la chambre d'infusion 10. Le miroir 36 est orienté de manière à réfléchir le faisceau de détection 24 vers le récepteur 25. La zone prédéterminée de détection est ainsi réalisée par un double faisceau 24 agencé de manière similaire au précédent mode de réalisation du dispositif de détection, si ce n'est qu'il a une forme de V inscrit dans le débouché du réceptacle 11 et situé de part et d'autre d'un diamètre de ce débouché. Ce mode de réalisation peut présenter des avantages pour la conception de la machine du fait que le miroir 36 peut présenter des dimensions réduites, ne nécessite pas d'alimentation électrique et est peu sensible à la chaleur.

Un procédé de commande de la machine à café 1 décrite ci-dessus va être explicité tout d'abord en référence aux figures 1, 4, 5 et 6.

A la figure 1 représentant la chambre d'infusion 10 en position ouverte, le réceptacle 11 est vide suite à l'éjection de la dose pré-emballée 4 de produit infusé lors du précédent cycle vers le bac de récupération 7.

A partir de cette position représentée à la figure 1, le système de distribution 3 délivre, suite à l'actionnement d'un bouton de commande 33, une dose de produit. 4 au niveau de l'ouverture d'introduction 9. Le sommet de la dose 4 est orienté vers le bas et la dose est conduite par gravité le long de la rampe inclinée 8a jusqu'au débouché 8c du conduit d'alimentation 8, comme cela est visible à la figure 4. La dose de produit 4 pénètre alors dans l'espace libre 20 de la chambre d'infusion et coupe le faisceau optique 24 formant la zone prédéterminée de détection. Le dispositif de détection 21 modifie alors le signal émis pour passer d'un signal d'absence de dose à un signal indiquant la présence de la dose 4. Le dispositif de commande de la machine peut alors déterminer que, suite à la délivrance par le système de distribution 3, une dose de produit est arrivée au niveau du réceptacle 11. Mais il pourrait parfaitement s'agir d'une alimentation manuelle en doses pré-emballées et, dans ce cas, le dispositif de commande de la machine peut déterminer qu'une opération d'infusion va débuter.

Dans la plupart des cas, la dose 4 arrive au niveau du débouché du réceptacle 11 de manière relativement bien orientée, de sorte qu'elle s'insère naturellement dans le creux de ce réceptacle 11 pour prendre une position correcte représentée à la figure 5, qui correspond à sa position normale lorsque la chambre 10 est en position fermée. Le faisceau optique 24 émis vers le récepteur 25 est alors rétabli du fait de son agencement au-dessus du plan du débouché du réceptacle 11. Le dispositif de commande reçoit alors un signal d'absence de dose de produit et détermine que la dose 4 est présente et correctement positionnée dans le réceptacle 11. Le dispositif de commande détermine alors que l'alimentation de la chambre d'infusion s'est déroulée sans incident, et que la dose pré-emballée 4 est bien placée.

On notera que la précision obtenue pour déterminer le positionnement correct de la dose 4 peut être plus ou moins importante selon que la zone prédéterminée de détection formée par le faisceau 24 est située de manière plus ou moins adjacente à la partie saillante de la dose 4 correctement positionnée.

A partir de cette configuration représentée à la figure 5, le couvercle 12 est déplacé vers le réceptacle 11 pour placer la chambre d'infusion dans la position fermée représentée à la figure 6, position fermée à partir de laquelle le processus de préparation d'une boisson se déroule de manière habituelle.

Les figures 7 et 8 illustrent le cas où la dose pré-emballée de produit à infuser 4 prend une mauvaise position ou acquière une énergie cinétique trop importante dans le conduit d'alimentation 8, et se place en travers du débouché du réceptacle 11, comme représenté à la figure 7.

Dans ce cas, le dispositif de détection 21 a bien envoyé au dispositif de commande un signal correspondant à l'arrivée d'une dose, mais contrairement au fonctionnement sans incident, ce signal de présence d'une dose continue à être émis. Le dispositif de commande est alors avantageusement conçu pour initier une procédure d'incident si le signal de présence d'une dose perdure au-delà d'un temps prédéterminé correspondant au temps habituellement nécessaire pour que la dose 4 se mette correctement en place dans le réceptacle 11 sous l'effet de son poids et de son énergie cinétique. Ce temps prédéterminé est typiquement compris entre un dixième de seconde et une seconde.

Cette procédure d'incident pourrait simplement comprendre l'émission d'un signal d'alerte vers l'utilisateur, sous forme lumineuse ou sonore, pour l'informer qu'un incident s'est produit ou plus précisément qu'une dose de produit est bloquée au niveau du débouché du réceptacle 11.

Toutefois, selon un mode préféré de commande de la machine, il est prévu une étape initiale de la procédure d'incident au cours de laquelle le dispositif de commande initie un déplacement du couvercle 12 vers le réceptacle 11 sur une première course H1 indiquée aux figures 7 et 8. Cette première course H1 est nettement inférieure à la course complète de fermeture H, mais doit être suffisamment importante pour que le couvercle 11 vienne en contact avec la dose pré-emballée 4, par exemple de l'ordre de la moitié de la course complète H. Du fait du contact avec le couvercle 12, la dose 4 est légèrement forcée vers le réceptacle 11 et, dans bon nombre de cas, elle reprend une orientation qui lui permet d'atteindre sous l'effet de son propre poids, c'est-à-dire en perdant le contact avec le couvercle 12, sa position correcte dans le réceptacle 11, comme illustré à la figure 8. L'espace libre 20 qui apparaît alors entre le couvercle 12 et la dose 4, permet d'avoir de nouveau un signal d'absence de dose grâce au rétablissement de l'émission du faisceau optique 24 vers le récepteur 25. Le dispositif de commande détermine alors que le positionnement correct de la dose 4 est rétabli et commande la poursuite du déplacement du couvercle 12 sur une deuxième course H2 pour atteindre la configuration fermée de la chambre d'infusion, telle que représentée à la figure 6. Grâce à cette disposition du procédé de commande et à l'agencement approprié du dispositif de détection 21, bon nombre d'incidents liés à l'insertion de la dose 4 dans le réceptacle 11 peuvent être remédiés, sans même que l'utilisateur s'en aperçoive.

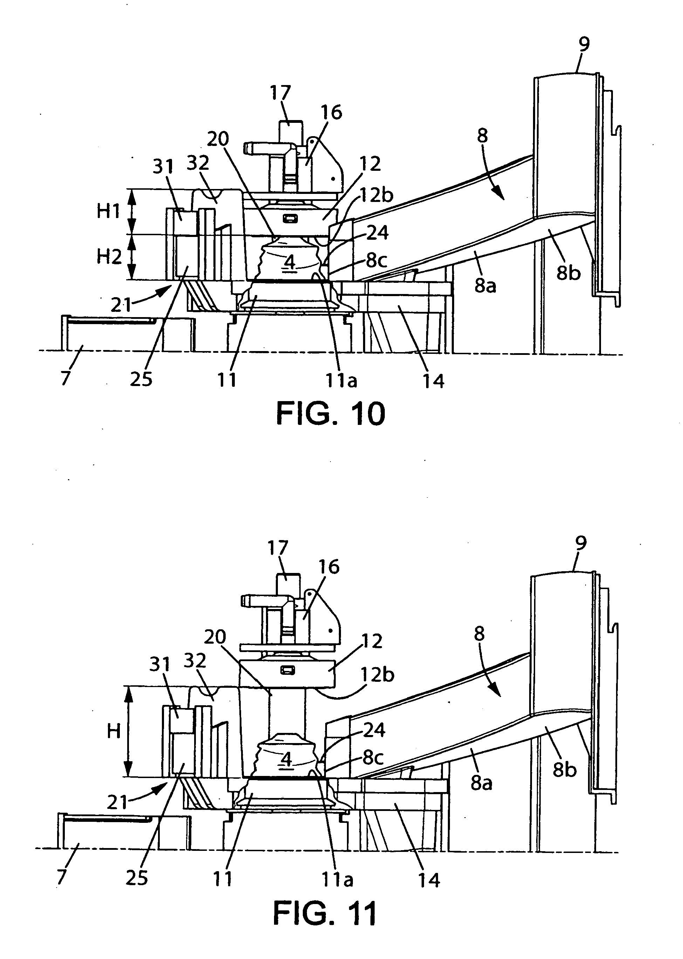

Par contre, si la dose de produit 4 est orientée de telle manière qu'aucun positionnement correct ne peut être obtenu, par exemple si elle arrive à l'envers et reste en appui par sa collerette sur le réceptacle 11, comme représenté à la figure 9, le dispositif de détection 21 continuera à émettre un signal de présence de la dose 4 à la fin de la première course H1 de déplacement du couvercle 12, même après un temps prédéterminé, lequel couvercle écrasant partiellement la dose 4. Dans une telle situation représentée à la figure 10, le dispositif de commande détermine alors par une programmation adéquate qu'un incident irrémédiable s'est produit. Ce n'est alors que dans ce cas qu'un signal d'alerte est émis vers l'utilisateur.

L'utilisateur est alors invité à retirer la dose 4 bloquée au niveau du réceptacle 11. Dans ce but, une trappe amovible 38 (figure 1) est prévue sur une face latérale du boîtier 2 pour faciliter l'accès à la chambre d'infusion 10, éventuellement après avoir retiré le bac de récupération 7.

Egalement pour faciliter le retrait par l'utilisateur de la dose 4 partiellement écrasée, l'émission du signal d'alerte est préférentiellement accompagnée d'une commande de déplacement vers le haut du couvercle 12 pour atteindre la position ouverte représentée à la figure 11.

Le dispositif de détection 21 agencé selon l'invention peut également être mis à profit pour détecter un incident survenant après l'opération d'infusion. En effet, à la fin de l'opération d'infusion, le couvercle 12 est remonté vers la position ouverte et la dose pré-emballée usagée 4 est éjectée vers le bac de récupération 7, par exemple en remontant le fond du réceptacle 11 une fois en effectuant un mouvement de balayage, à l'aide de tout dispositif d'éjection approprié non représenté, vers le bac de récupération 7.

Toutefois, il est possible qu'un incident survienne au cours de cette opération d'éjection de la dose de produit infusé, notamment si le bac de récupération 7 est plein. Il est donc avantageux de s'assurer que la dose 4 est bien sortie du réceptacle 11 et qu'elle n'est pas restée bloquée sur le pourtour annulaire 11a de celui-ci, c'est-à-dire dans l'espace libre 20 de la chambre d'infusion en position ouverte, de manière que l'opération suivante de préparation d'une boisson puisse se dérouler sans incident.

Dans ce but, il est avantageux de mettre en oeuvre les signaux fournis par le dispositif de détection 21 de la manière suivante après une opération d'infusion. Après l'opération d'infusion, le couvercle 12 qui générait un signal de présence de dose en position fermée, est remonté et dégage un espace permettant de rétablir le faisceau de détection 24 sur le récepteur 25, et donc de générer un signal d'absence de dose. Ce signal d'absence peut être obtenu en positionnant correctement le faisceau de détection 24, même si des organes d'extraction ou d'éjection, non représentés, sont entraînés avec le déplacement du couvercle 12.

Par la suite, on attend un signal de présence d'une dose indiquant que la dose de produit infusé effectue effectivement un mouvement de sortie du réceptacle 11. Le contrôle de cette sortie peut être néanmoins effectué même sans signal préalable d'absence de dose en corroborant le signal du dispositif de détection 21 avec une grandeur représentant la position du couvercle 12.

Si l'éjection de la dose 4 s'effectue normalement, le signal de présence d'une dose doit être suivi d'un signal d'absence dans un temps prédéterminé correspondant à une éjection normale. Par contre, si ce signal d'absence de dose ne survient pas, cela signifie que la dose de produit infusé 4 est restée dans l'espace libre 20 défini par la chambre d'infusion en position ouverte. Un signal d'alerte est alors émis vers l'utilisateur car l'insertion automatique ou manuelle d'une nouvelle dose pré-emballée risque fort de créer un blocage de la machine. Ce signal d'alerte peut être identique à celui émis au cours de la procédure d'alimentation de la chambre, mais il peut s'agir d'un signal différent indiquant que la cause probable de l'incident est un remplissage excessif du bac de récupération 7.

Il ressort de la description précédente que le dispositif de détection unique 21 permet de détecter différents dysfonctionnements et incidents au cours de la séquence de fonctionnement de la machine à café, tout en fournissant une indication particulièrement fiable à propos du positionnement correct d'une dose pré-emballée 4 dans le réceptacle 11 de la chambre d'infusion. Mais bien entendu, ceci n'exclut pas la présence d'autres capteurs, soit pour augmenter la fiabilité du fonctionnement, soit pour détecter d'autres types d'incidents.

## Revendications

1. Machine pour préparer une infusion comprenant :
- une chambre d'infusion (10) délimitée par un réceptacle (11) et un couvercle (12), ledit réceptacle (11) présentant un débouché et étant apte à recevoir au moins en partie une dose pré-emballée (4) de produit à infuser, et ledit couvercle (12) étant mobile par rapport au réceptacle (11) sous l'action d'un dispositif de commande entre une position fermée et une position ouverte dans laquelle il est situé à distance du débouché du réceptacle (11) et ménage avec ledit débouché un espace libre (20) ;
- un conduit d'alimentation (8) apte à conduire la dose de produit (4) depuis une ouverture d'introduction (9) jusqu'au réceptacle (11) en passant par l'espace libre (20) de la chambre d'infusion en position ouverte ; et
- un dispositif de détection (21) de dose de produit apte à indiquer au dispositif de commande la présence ou l'absence d'une dose de produit dans une zone prédéterminée de détection (24),
**caractérisée en ce que** la zone prédéterminée de détection (24) est située au moins en partie dans l'espace libre (20) de la chambre d'infusion (10) en position ouverte.

2. Machine selon la revendication 1, dans laquelle la zone prédéterminée de détection (24) est agencée de manière à être sensiblement adjacente à la dose de produit (4) lorsque celle-ci est correctement positionnée dans le réceptacle (11) de la chambre d'infusion (10).

3. Machine selon la revendication 1 ou 2, dans laquelle la zone prédéterminée de détection (24) a la forme d'un faisceau s'étendant en travers de l'espace libre (20) de la chambre d'infusion (10) de manière sensiblement parallèle au débouché du réceptacle (11).

4. Machine selon l'une quelconque des revendications précédentes, dans laquelle le dispositif de détection (21) comprend un émetteur (23) et un récepteur (25), ledit émetteur (23) étant apte à émettre un rayon optique (24) sur le récepteur (25) en l'absence d'une dose de produit (4) dans la zone prédéterminée de détection.

5. Machine selon la revendication 4, dans laquelle l'émetteur (23) et le récepteur (25) sont situés à distance de la chambre d'infusion (10), et de préférence à une distance supérieure à la moitié de la dimension principale du débouché du réceptacle (11).

6. Procédé de commande d'une machine pour préparer une infusion dans lequel on fournit une machine selon l'une quelconque des revendications précédentes, **caractérisé en ce qu'**il comprend, préalablement à une opération d'infusion, les étapes de :
- introduction d'une dose pré-emballée (4) de produit à infuser par l'ouverture (9) du conduit d'alimentation (8) ;
- attente d'un signal de présence d'une dose de produit (4) par le dispositif de détection (21) ; puis
- attente d'un signal d'absence de la dose de produit (4) par ledit dispositif de détection (21) ; puis
- commande du déplacement relatif du couvercle (12) jusqu'à la position fermée de la chambre d'infusion (10).

7. Procédé selon la revendication 6, dans lequel on prévoit le déclenchement d'une procédure d'incident si le signal d'absence de dose ne survient pas dans un temps prédéterminé après l'émission du signal de présence de la dose de produit (4).

8. Procédé selon la revendication 7, dans lequel la procédure d'incident comprend une étape initiale au cours de laquelle le dispositif de commande commande un premier déplacement relatif (H1) du couvercle (12) depuis sa position ouverte jusqu'à une position intermédiaire entre les positions ouverte et fermée, et au cours duquel le dispositif de commande attend l'émission d'un signal d'absence de dose de produit (4) ; et
- si un signal d'absence de dose survient dans un temps prédéterminé après le premier déplacement relatif (H1), le dispositif de commande commande un deuxième déplacement (H2) du couvercle (12) jusqu'à la position fermée ;
- si un signal d'absence de dose ne survient pas, un signal d'alerte est émis vers l'utilisateur.

9. Procédé selon la revendication 8, dans lequel l'étape d'émission d'un signal d'alerte est associée à une commande du déplacement relatif du couvercle (12) vers sa position ouverte.

10. Procédé selon l'une quelconque des revendications 6 à 9, dans lequel, après l'opération d'infusion, une opération d'éjection de la dose de produit infusé (4) vers un bac de récupération (7) comprend les étapes de :
- attente d'un signal de présence d'une dose de produit par le dispositif de détection (21) ; puis
- attente d'un signal d'absence de la dose de produit par ledit dispositif de détection (21) ; et
- émission d'un signal indiquant un remplissage excessif du bac de récupération (7) dans le cas où le signal d'absence de dose ne survient pas dans un temps prédéterminé après le signal de présence.

## Claims

1. A machine for preparing an infusion comprising:
- an infusion chamber (10) delimited by a receptacle (11) and a cover (12), said receptacle (11) comprising an opening and capable of receiving at least partially a pre-packed dose (4) of the product to be infused, and said cover (12) being movable relative to the receptacle (11) by an action of a control device between a closed position and an open position wherein it is located at a distance from the receptacle (11) opening and forms with said opening a free space (20)
- a supply duct (8) which can deliver the product dose (4) from an introduction opening (9) up to the receptacle (11) by passing via the free space (20) of the infusion chamber in open position; and
- a product dose detection device (21) which can indicate the presence or absence of a product dose in a preset detection zone (24) to the control device, **characterised in that** the preset detection zone (24) is located at least partially inside the free space (20) of the infusion chamber (10) in open position.

2. A machine according to claim 1, wherein the preset detection zone (24) is arranged so as to be substantially adjacent to the product dose (4) when this dose is positioned correctly in the infusion chamber (10) receptacle (11).

3. A machine according to claim 1 or 2, wherein the preset detection zone (24) takes the form of a beam extending through the free space (20) of the infusion chamber (10) substantially parallel to the receptacle (11) opening.

4. A machine according to any one of the preceding claims, wherein the detection device (21) comprises a transmitter (23) and a receiver (25), said transmitter (23) being capable of emitting an optical ray (24) to the receiver (25) when there is no product dose (4) in the preset detection zone.

5. A machine according to claim 4, wherein the transmitter (23) and the receiver (25) are located at a distance from the infusion chamber (10), and preferably at a distance greater than half of the large dimension of the receptacle (11) opening.

6. A method of controlling a machine for preparing an infusion wherein a machine according to any one of the preceding claims is supplied, **characterised in that** it comprises the following steps, prior to an infusion operation:
- introducing a pre-packed dose (4) of the product to be infused via the opening (9) of the supply duct (8)
- waiting for a signal indicating the presence of a product dose (4) sent by the detection device (21), and
- waiting for a signal indicating the absence of the product dose (4) sent by said detection device (21), then
- commanding the relative displacement of the cover (12) up to the closed position of the infusion chamber (10).

7. A method according to claim 6, wherein an incident procedure is triggered if the dose absent signal does not occur within a preset time after the transmission of the product dose present signal (4).

8. A method according to claim 7, wherein the incident procedure comprises an initial step during which the control device commands a first relative displacement (HI) of the cover (12) from its open position up to an intermediate position between the open and closed positions, and during which the control device waits for the transmission of a product dose absent signal (4); and
- if a dose absent signal occurs within a preset time after the first relative displacement (HI), the control device commands a second displacement (H2) of the cover (12) up to the closed position
- if a dose absent signal does not occur, an alert signal is sent to the user.

9. A method according to claim 8, wherein the step of transmitting an alert signal is associated with a command of the relative displacement of the cover (12) to its open position.

10. A method according to any one of claims 6 to 9, wherein, after the infusion operation, an operation of ejecting the infused product dose (4) to a recovery tray (7) comprises the following steps:
- waiting for a product dose present signal sent by the detection device (21); and
- waiting for a product dose absent signal sent by said detection device (21); and
- transmitting a signal indicating an overfilling of the recovery tray (7) in case the dose absent signal does not occur within the preset time after the dose present signal.

## Patentansprüche

1. Maschine für die Bereitung einer Aufbrühung, umfassend:
- eine Aufbrühkammer (10), die von einem Behältnis (11) und einem Deckel (12) begrenzt ist, wobei das Behältnis (11) eine Ausmündung aufweist und imstande ist, mindestens einen Teil einer abgepackten Dosis (4) eines aufzubrühenden Produktes aufzunehmen, und wobei der Deckel (12) in Bezug auf das Behältnis (11) unter Einwirkung einer Steuervorrichtung zwischen einer geschlossenen Position und einer offenen Position bewegbar ist, in der er sich von der Ausmündung des Behältnisses (11) beabstandet befindet und mit der Ausmündung einen Freiraum (20) ausbildet;
- einen Zuführkanal (8), der imstande ist, die Produktdosis (4) von einer Einführöffnung (9) bis zum Behältnis (11) über den Freiraum (20) der Aufbrühkammer in offener Position zu führen; und
- eine Erfassungsvorrichtung (21) der Produktdosis, die imstande ist, der Steuervorrichtung die Anwesenheit oder Abwesenheit einer Produktdosis in einem vorausbestimmten Erfassungsbereich (24) anzuzeigen,
**dadurch gekennzeichnet, dass** sich der vorausbestimmte Erfassungsbereich (24) mindestens teilweise im Freiraum (20) der Aufbrühkammer (10) in offener Position befindet.

2. Maschine nach Anspruch 1, wobei der vorausbestimmte Erfassungsbereich (24) so angeordnet ist, dass er im Wesentlichen an die Produktsdosis (4) angrenzt, wenn diese richtig im Behältnis (11) der Aufbrühkammer (10) positioniert ist.

3. Maschine nach Anspruch 1 oder 2, wobei der vorausbestimmte Erfassungsbereich (24) die Form eines Strahls aufweist, der sich durch den Freiraum (20) der Aufbrühkammer (10) im Wesentlichen parallel zur Ausmündung des Behältnisses (11) erstreckt.

4. Maschine nach einem der vorhergehenden Ansprüche, wobei die Erfassungsvorrichtung (21) einen Sender (23) und einen Empfänger (25) umfasst, wobei der Sender (23) imstande ist, an den Empfänger (25) bei Abwesenheit einer Produktdosis (4) im vorausbestimmten Erfassungsbereich einen optischen Strahl (24) auszusenden.

5. Maschine nach Anspruch 4, wobei sich der Sender (23) und der Empfänger (25) von der Aufbrühkammer (10) beabstandet befinden, vorzugsweise in einem Abstand, der größer ist als die Hälfte der größten Abmessung der Ausmündung des Behältnisses (11).

6. Verfahren zum Steuern einer Maschine für die Bereitung einer Aufbrühung, wobei eine Maschine nach einem der vorhergehenden Ansprüche bereitgestellt wird, **dadurch gekennzeichnet, dass** es vor einem Aufbrühvorgang folgende Schritte umfasst:
- das Einführen einer abgepackten Dosis (4) eines aufzubrühenden Produktes über die Öffnung (9) des Zuführkanals (8);
- das Warten auf ein Signal für die Anwesenheit einer Produktdosis (4) von der Erfassungsvorrichtung (21); dann
- das Warten auf ein Signal für die Abwesenheit der Produktdosis (4) von der Erfassungsvorrichtung (21); dann
- das Steuern der relativen Verschiebung des Deckels (12) bis zur geschlossenen Position der Aufbrühkammer (10).

7. Verfahren nach Anspruch 6, wobei das Auslösen eines Störungsverfahrens vorgesehen wird, falls das Signal für die Abwesenheit der Dosis nicht innerhalb einer vorausbestimmten Zeit nach Aussenden des Signals für die Anwesenheit der Produktdosis (4) erfolgt.

8. Verfahren nach Anspruch 7, wobei das Störungsverfahren eine Anfangsphase umfasst, im Laufe derer die Steuervorrichtung eine erste relative Verschiebung (H1) des Deckels (12) ausgehend von seiner offenen Position bis in eine Zwischenposition zwischen der offenen und der geschlossenen Position befiehlt, und im Laufe derer die Steuervorrichtung auf die Aussendung eines Signals für die Abwesenheit der Produktdosis (4) wartet; und
- wenn ein Signal für die Abwesenheit der Dosis innerhalb einer vorausbestimmten Zeit nach der ersten relativen Verschiebung (H1) erfolgt, befiehlt die Steuervorrichtung eine zweite Verschiebung (H2) des Deckels (12) bis in die geschlossene Position;
- wenn kein Signal für die Abwesenheit der Dosis erfolgt, wird ein Alarmsignal an den Benutzer ausgesendet.

9. Verfahren nach Anspruch 8, wobei der Schritt des Aussendens eines Alarmsignals mit einem Befehl zur relativen Verschiebung des Deckels (12) in seine offene Position verbunden ist.

10. Verfahren nach einem der Ansprüche 6 bis 9, wobei nach dem Aufbrühvorgang ein Auswurfvorgang der aufgebrühten Produktdosis (4) in einen Sammelbehälter (7) folgende Schritte umfasst:
- das Warten auf ein Signal für die Anwesenheit einer Produktdosis von der Erfassungsvorrichtung (21); dann
- das Warten auf ein Signal für die Abwesenheit der Produktdosis von der Erfassungsvorrichtung (21); und
- das Aussenden eines Signals, das eine Überfüllung des Sammelbehälters (7) anzeigt, falls das Signal für die Abwesenheit der Dosis nicht innerhalb einer vorausbestimmten Zeit nach dem Anwesenheitssignal erfolgt.
